# EUROPEAN PATENT APPLICATION

(11) **EP 2 749 897 A2**
(43) Date of publication of application: **02.07.2014**
(21) Application number: 13275332.8
(22) Date of filing: 20.12.2013
(51) Int. Cl.: G01S 5/14

(54) **Method for searching for tag with communication error and electronic shelf label system server therefor**

(30) Priority: 28.12.2012 KR 20120156861
(71) Applicant: Samsung Electro-Mechanics Co., Ltd., Gyeonggi-do (KR)
(72) Inventor: Kim, Ju Hyung, 443-743 Gyeonggi-do (KR); Kim, Eun Sun, 443-743 Gyeonggi-do (KR); Seo, Jeong Su, 443-743 Gyeonggi-do (KR); Namgung, Yong Gil, 443-743 Gyeonggi-do (KR)
(74) Representative: Powell, Timothy John

(57) **Abstract**

Disclosed herein are a method for searching for a tag with a communication error and an electronic shelf label system server. The electronic shelf label system server communicating with a plurality of gateways which are installed in a store includes: a gateway identification unit identifying the gateway, which receives a tag signal generated from a tag with a communication error, among the plurality of gateways; a signal attenuation factor measurement unit measuring a signal attenuation factor of the tag signal which is received by the identified gateway; an antenna characteristics measurement unit measuring antenna characteristics of the identified gateway; and a tag position estimation unit determining a spaced distance between the identified gateway and the tag with a communication error and estimating a position of the tag with a communication error based on a position coordinate of the identified gateway and the spaced distance.

## Description

This application claims the foreign priority benefit of Korean Patent Application Serial No. 10-2012-0156861 entitled "Method For Searching For Tag With Communication Error And Electronic Shelf Label System Therefor" filed on December 28, 2012, which is hereby incorporated by reference in its entirety into this application.

### BACKGROUND OF THE INVENTION

### 1. Technical Field

The present invention relates to a method for searching for a tag with a communication error and an electronic shelf label system therefor.

### 2. Description of the Related Art

A label displaying information and prices of products to display and sell a large number of products within certain places, such as various retail stores has been used. Generally, a price display label is based on a method for attaching product information in the vicinity of a place at which the corresponding products are displayed, by directly handwriting the product information required for sales, for example, price and discount information on paper or printing the product information on paper depending on a standardized format.

The conventional method may be simple and convenient and may be implemented at low cost, but the use of the conventional paper label application method is limited since in large retail stores, the standardized format is used for hundreds of thousands of products and prices of products are frequently fluctuated. Each time the price information on products is changed, time and man power are wasted to perform the paper label work and replace the paper label, and therefore the improvement therefor is required in terms of the large retail stores.

Recently, attempts to replace the existing paper label with an electronic tag using an electronic device in response to market needs have been conducted. An example of the attempts is an electronic shelf label (hereinafter, referred to as 'ESL') system.

Since the electronic shelf label system applied to the retail stores serves to prevent printing of a price table and a worker's error and increase reliability of a consumer for prices of products within retail stores, the electronic shelf label system has been used in many countries, such as Europe. Referring to Korean Patent Laid-Open Publication No. 2010-0128906, and the like, have disclosed an ESL terminal and system using an RFID scheme which may update the price information on the electronic shelf label device, and the like, in real time and a method therefor.

However, in terms of characteristics of a wireless communication error occurring due to external interference signals at the time of transmitting price data, and the like, the information is not perfectly transferred. Therefore, a warning message, and the like, is displayed to enable a user to confirm the information on the electronic shelf label device with a transmission error at the time of transmitting the information such as a price.

Tags with a communication error about a price, and the like need to search depending on the warning message confirmed by the server; however, in case of Europe, since workers from other countries work in the retail stores, the case in which the workers do not easily search for products with an error may frequently occur.

Therefore, a need exists for a method of easily searching for the tags with a communication error.

### [Related Art Document]

### [Patent Document]

(Patent Document 1) Korean Patent Laid-open Publication No. 2010-0128906

### SUMMARY OF THE INVENTION

An object of the present invention is to provide a method for searching for a tag with a communication error capable of easily searching for a tag with a communication error based on a tag signal received by a gateway, and an electronic shelf label system server therefor.

Other objects of the present invention may be understood by the following description.

According to an exemplary embodiment of the present invention, there is provided an electronic shelf label system server communicating with a plurality of gateways which are installed in a store, including: a gateway identification unit identifying the gateway, which receives a tag signal generated from a tag with a communication error, among the plurality of gateways; a signal attenuation factor measurement unit measuring a signal attenuation factor of the tag signal which is received by the identified gateway; an antenna characteristics measurement unit measuring antenna characteristics of the identified gateway; and a tag position estimation unit determining a spaced distance between the identified gateway and the tag with a communication error based on the signal attenuation factor and the antenna characteristics and estimating a position of the tag with a communication error based on a position coordinate of the identified gateway and the spaced distance.

The signal attenuation factor measurement unit may acquire the signal attenuation factor based on received signal strength indication (RSSI) of the tag signal.

The antenna characteristics may be at least one of a length and a degree of the antenna which is installed in the identified gateway.

The tag position estimation unit may map signal attenuations depending on the spaced distance from a path loss in a free space and reflect a beam coverage depending on the antenna characteristics to determine the spaced distance.

The tag position estimation unit may set position coordinates of at least three gateways of which the spaced distance is determined as a center and estimate points at which at least three virtual circles setting the spaced distance as a radius meet each other as the position of the tag with a communication error.

According to another exemplary embodiment of the present invention, there is provided a method for searching for a tag with a communication error in an electronic shelf label system server communication with a plurality of gateways which are installed in a store and a recording medium recorded with programs for performing the same.

According to still another exemplary embodiment of the present invention, there is provided a method for searching for a tag with a communication error in an electronic shelf label system server communicating with a plurality of gateways which are installed in a store, the method including: identifying a gateway receiving a tag signal generated from a tag with a communication error, among the plurality of gateways; measuring a signal attenuation factor of the tag signal which is received by the identified gateway; measuring antenna characteristics of the identified gateway; determining a spaced distance between the identified gateway and the tag with a communication error based on the signal attenuation factor and the antenna characteristics; and estimating a position of the tag with a communication error based on a position coordinate of the identified gateway and the spaced distance.

In the measuring of the signal attenuation factor, the signal attenuation factor may be acquired based on received signal strength indication (RSSI) of the tag signal.

The antenna characteristics may be at least one of a length and a degree of the antenna which is installed in the identified gateway.

In the determining of the spaced distance, signal attenuations may map each other depending on the spaced distance from a path loss in a free space and a beam coverage may be reflected depending on the antenna characteristics to determine the spaced distance.

In the estimating of the tag position, position coordinates of at least three gateways of which the spaced distance is determined may be set as a center and points at which at least three virtual circles setting the spaced distance as a radius meet each other may be estimated as the position of the tag with a communication error.

Other aspects, features, advantages in addition to the forgoing will be apparent from the following drawings, claims, and detailed description of the invention.

### BRIEF DESCRIPTION OF THE DRAWINGS

FIG. 1 is a diagram illustrating a configuration of an electronic shelf label system.
FIG. 2 is a block diagram illustrating a configuration of an electronic shelf label system server according to an exemplary embodiment of the present invention.
FIG. 3 is a table illustrating signal attenuation depending on a distance in a frequency band of 2.4 GHz.
FIGS. 4A to 4C are diagrams illustrating beam coverages depending on antenna characteristics of a gateway.
FIG. 5 is a diagram illustrating a method for searching for a position of a tag with a communication error according to an exemplary embodiment of the present invention.
FIG. 6 is a flow chart of a method for searching for a tag with a communication error according to the exemplary embodiment of the present invention.

### DESCRIPTION OF THE PREFERRED EMBODIMENTS

Since the present invention may be variously modified and have several exemplary embodiments, specific exemplary embodiments will be shown in the accompanying drawings and be described in detail in a detailed description. However, it is to be understood that the present invention is not limited to the specific exemplary embodiments, but includes all modifications, equivalents, and substitutions included in the spirit and the scope of the present invention. Further, when it is determined that the detailed description of the known art related to the present invention may obscure the gist of the present invention, the detailed description thereof will be omitted.

Terms used in the specification, 'first', 'second', etc., may be used to describe various components, but the components are not to be construed as being limited to the terms. The terms are used to distinguish one component from another component.

Terms used in the present specification are used only in order to describe specific exemplary embodiments rather than limiting the present invention. Singular forms are intended to include plural forms unless the context clearly indicates otherwise. It will be further understood that the terms "comprises" or "have" used in this specification, specify the presence of stated features, steps, operations, components, parts, or a combination thereof, but do not preclude the presence or addition of one or more other features, numerals, steps, operations, components, parts, or a combination thereof.

Hereinafter, exemplary embodiments of the present invention will be described with reference to the accompanying drawings, and in describing the accompanying drawings, like components are denoted by like reference numerals and the overlapping description thereof will be omitted.

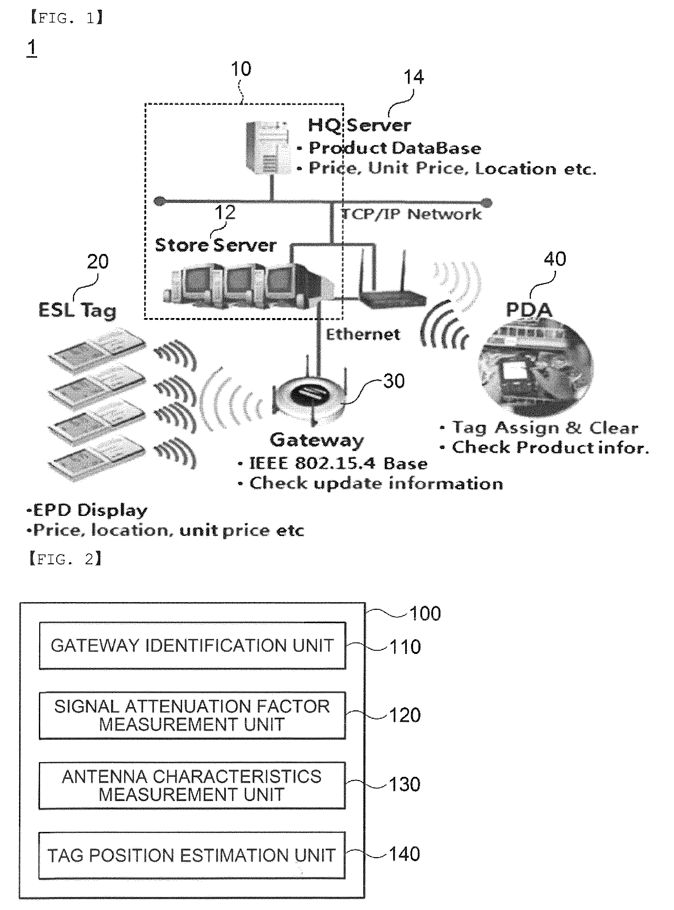

FIG. 1 is a diagram illustrating a configuration of an electronic shelf label system.

Referring to FIG. 1, an electronic shelf label system 1 uses a PDA 40 which matches or connects products with electronic tags 20 when the electronic tags 20 are installed in the products and then receives price information on the products through a gateway 30 which is attached to the ceiling. The electronic tag 20 includes an electrophoretic display (EPD) to be able to display a price, a position, a unit price, and the like.

The price information is transmitted through communication, such as WiFi, between the PDA 40 and a server 10. Meanwhile, for example, Ethernet communication is performed between the server 10 and the gateway 30 and for example, Zigbee communication is performed between the gateway 30 and products (or electronic tags 20 attached to products).

The server 10 may include a store server 12 which is installed within retail stores to directly communicate with the gateway 30 and an HQ server 14 which is installed in a product database to store information on prices, positions, and the like, of products. The store server 12 and the HQ server 14 may be connected to each other, for example, through a TCP/IP network.

Herein, in order to differentiate the same products, barcodes of products and mac information on the tags are assigned at the time of installing the tags in the retail store. The so connected information is transmitted to the server 10 within the retail store, for example, through WiFi, and the like and then the product information, the price information, the unit price, and the like are managed by the server 10.

Each time events, such as price fluctuation, are generated, the server 10 searches for the electronic tags 20 with the events through a transmitting unit Tx of the gateway 30 to transmit the fluctuated price information to the tags with the price fluctuation. When the price update fails, the electronic tags 20 generate ACK signals and the gateway 30 receives the ACK signals, transmits the received ACK signals to the server 10, and then displays the occurrence of error through a graphical user interface GUI of the server 10.

In this case, the tag information matches the product information, but since there is no information on the positions of the tags, only the product information with a communication error about a price, and the like is displayed and the positions of the tags with a communication error may be roughly figured out based on the product information. Therefore, the electronic shelf label system capable of more accurately searching for the positions of the tags with a communication error according to the exemplary embodiment of the present invention will be described with reference to the accompanying drawings.

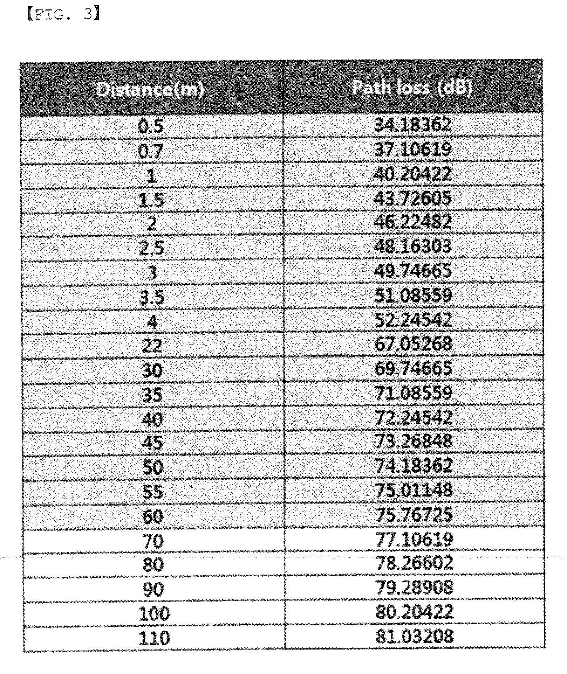

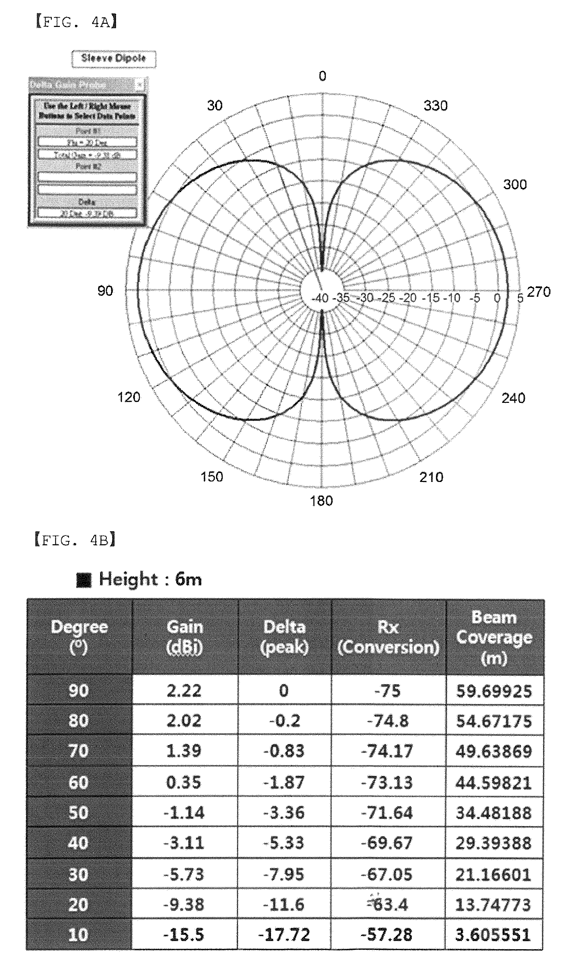

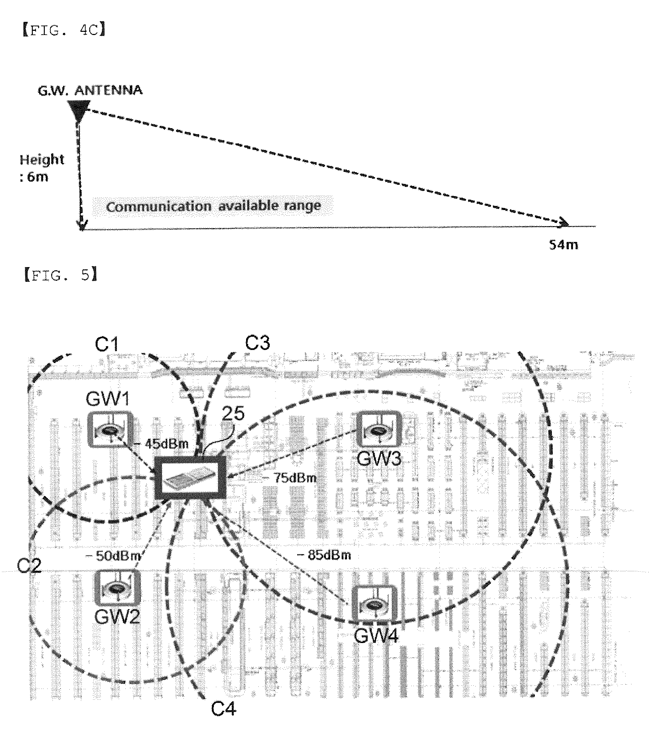

FIG. 2 is a block diagram illustrating a configuration of an electronic shelf label system server according to an exemplary embodiment of the present invention, FIG. 3 is a table illustrating a signal attenuation depending on a distance in a frequency band of 2.4 GHz, FIGS. 4A to 4C are diagrams illustrating beam coverages depending on antenna characteristics of a gateway, and FIG. 5 is a diagram illustrating a method for searching for a position of a tag with a communication error according to an exemplary embodiment of the present invention.

An electronic shelf label system server 100 according to an exemplary embodiment of the present invention uses an organic relationship between an attenuation factor depending on a distance of an RF signal and an attenuation factor depending on antenna characteristics to be able to more accurately search for positions of tags with a communication error.

Referring to FIG. 2, the electronic shelf label system server 100 includes a gateway identification unit 110, a signal attenuation factor measurement unit 120, an antenna characteristics measurement unit 130, and a tag position estimation unit 140.

The gateway identification unit 110 identifies the gateway receiving a tag signal (that is, ACK signal) generated from the electronic tag when the price update of the electronic tags fails. The gateway is provided with a separate signal generation unit or is applied with a signal generation algorithm, such that when receiving the tag signal informing that the price update of the electronic tags fails, the gateway may generate a message informing it and transmit the generated message to the electronic shelf label system server 100, along with the gateway identification information.

Therefore, the electronic shelf label system server 100 receives a price update failure message and extracts the gateway identification information included in the message to be able to identify the gateway receiving the tag signal from the tag with a communication error.

The signal attenuation factor measurement unit 120 measures the attenuation factor of the tag signal informing the failure of the price update received by the gateway which is identified by the gateway identification unit 110 or receives the data associated therewith from the corresponding gateway. Herein, the attenuation factor data of the tag signal may be transmitted with being included in the price update failure message and may be acquired based on received signal strength indication (RSSI) of the tag signal.

Generally, the RF signal, such as the tag signal, may be attenuated depending on the distance and the attenuated amount varies depending on a frequency, and the like. The communication used between the gateway and the electronic tag in the retail store may be Zigbee communication. In this case, the Zigbee communication uses a frequency band of 2.4 GHz.

Referring to FIG. 3, a signal attenuation amount, that is, a path loss depending on the distance between a signal generation source (in the exemplary embodiment of the present invention, tag with a communication error) and a signal receiver (in the exemplary embodiment of the present invention, gateway) in the frequency band of 2.4 GHz is arranged in a table type.

The signal attenuation amount depending on the distance may be obtained based on Formula which obtains the path loss in a free space. For example, when the distance between the signal generation source and the signal receiver is 0.5 m, the path loss is 34.18362 dB and when the distance is 60 m, the path loss is 75.76725 dB.

The antenna characteristics measurement unit 130 measures the antenna characteristics used in the gateway which is identified by the gateway identification unit 110 or receives the data associated therewith from the corresponding gateway. Herein, the antenna characteristics data may be transmitted with being included in the price update failure message.

The antenna used in the gateway may be, for example, a λ/4 dipole antenna. In this case, a beam coverage, an antenna gain, a communication available range, and the like, by an antenna simulation are illustrated in FIGS. 4A to 4C.

FIG. 4A illustrates a beam radiation pattern of the antenna, FIG. 4B illustrates the antenna gain, a delta, a receiving factor Rx, and the beam coverage depending on an antenna degree when an antenna length is 6 m, FIG. 4C illustrates the communication available range when the antenna length is 6 m.

When at least one of the antenna characteristics, for example, the antenna length and the antenna degree of the gateway is determined, it may be confirmed that the beam coverage of the antenna is determined based on the determined antenna characteristics. Therefore, the antenna characteristics measurement unit 130 may measure the antenna characteristics of the gateway which is identified by the gateway identification unit 110 and thus determine the beam coverage of the antenna.

The tag position estimation unit 140 uses the organic relationship between the signal attenuation factor measured by the signal attenuation factor measurement unit 120 and the antenna characteristics measured by the antenna characteristics measurement unit 130 to determine the distance from the gateway to the tag with a communication error.

Further, the distance to the tag with a communication error determined by the plurality of gateways which are identified by the gateway identification unit 110 are set to be a radius and when a circle is drawn based on the position of the gateway as a center, positions in the vicinity of intersection points at which a plurality of circles meet each other are estimated as the position of the tag with a communication error.

Referring to FIG. 5, it may be confirmed that the tag 25 with a communication error is spaced apart from a first gateway GW1 by 2m when the signal attenuation factor is -45 dBm in the case of the first gateway GW1, a second gateway GW2 by 3.5 m when the signal attenuation factor is - 50 dBm in the case of the second gateway GW2, a third gateway GW3 by 55 m when the signal attenuation factor is - 75dBm in the case of the third gateway GW3, and a fourth gateway GW4 by about 100 m when the signal attenuation factor is - 85 dBm in the case of the fourth gateway GW4.

Circles C1 to C4 are drawn based on the distance between each gateway GW1 to GW4 and the tag 25 with a communication error as a radius and it may be confirmed that when the intersection points are found, the corresponding point is a point at which the tag 25 with a communication error is present.

The tag position estimation unit 140 overlappingly displays the positions estimated as the point at which the tag 25 with a communication error is present on the store map stored in the database (not illustrated) and thus represents the displayed positions through the graphical user interface, thereby enabling a store manager to accurately confirm the positions. This may also be performed by a simple software utility.

FIG. 5 illustrates the case in which the identified gateway is four, which is only an example, and the tag position estimation unit 140 may sufficiently search for the accurate positions of the tags when the spaced distances between position coordinates of at least three gateways and the tag are known.

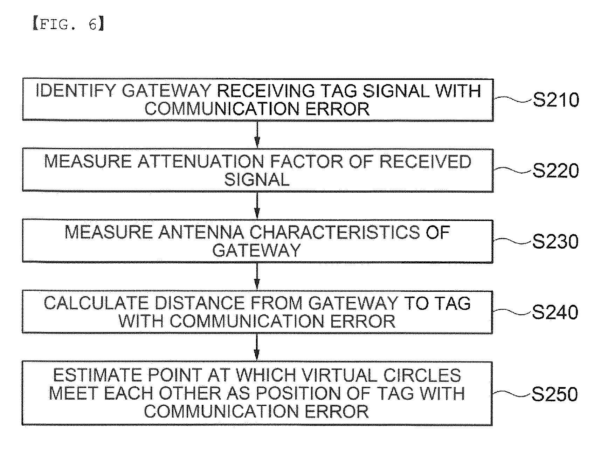

FIG. 6 is a flow chart of a method for searching for a tag with a communication error according to the exemplary embodiment of the present invention. In FIG. 6, each step may be executed by each component of the electronic shelf label system server illustrated in FIG. 2.

First, the gateways communicate with each electronic tag which is installed in the retail store. Among them, in the case in which the price update is requested to any electronic tag, but the price update fails, when the gateway receives the tag signal (tag signal with a communication error) informing the update failure, the gateway transmits the price update failure message including the gateway identification information to the electronic shelf label system server 100.

When receiving the price update failure message, the electronic shelf label system server 100 extracts the gateway identification information to identify the targeted gateway in step S210.

In step S220, the attenuation factor of the tag signal received by the identified gateway is measured. The attenuation factor of the tag signal is measured by the gateway and then may also be to the electronic shelf label system server 100.

In step S230, the antenna characteristics of the identified gateway are measured. The antenna characteristics data includes at least one of the antenna length and the antenna degree and may be transmitted from the gateway.

In step S240, the spaced distance between the gateway and the tag generating a specific signal (tag signal with a communication error) is calculated depending on the organic relationship between the previously measured attenuation factor of the tag signal and the antenna characteristics. The calculation of the spaced distance may be performed by the method as described with reference to FIGS. 3 and 4.

In step S250, a plurality of virtual circles are drawn based on the spaced distance between the position coordinates of the plurality of gateways and the tag and points at which the plurality of virtual circles meet each other are estimated as a point at which the tag with a communication error is present.

The store manager may easily search for the tag with a communication error by overlappingly displaying the estimated points on the retail store map, thereby increasing the speed and efficiency of management.

The method for searching for a tag with a communication tag illustrated in FIG. 6 may be performed with an automated procedure according to a time-series order by software programs, and the like which are embedded in the electronic shelf label system server. The codes and code segments configuring the programs may be easily derived by computer programmers in the art. Further, the programs are stored in an information storage medium which may be read by a computer and implements the method which is read and executed by the computer. An example of the information storage medium may include a magnetic recording medium, an optical recording medium, and a carrier wave medium.

According to the exemplary embodiments of the present invention, it is possible to easily search for the tag with a communication error based on the tag signal received by the gateway.

Although the preferred embodiments of the present invention have been disclosed for illustrative purposes, those skilled in the art will appreciate that various modifications, additions and substitutions are possible, without departing from the scope and spirit of the invention as disclosed in the accompanying claims. Accordingly, such modifications, additions and substitutions should also be understood to fall within the scope of the present invention.

## Claims

1. An electronic shelf label system server communicating with a plurality of gateways which are installed in a store, comprising:
a gateway identification unit identifying the gateway, which receives a tag signal generated from a tag with a communication error, among the plurality of gateways;
a signal attenuation factor measurement unit measuring a signal attenuation factor of the tag signal which is received by the identified gateway;
an antenna characteristics measurement unit measuring antenna characteristics of the identified gateway; and
a tag position estimation unit determining a spaced distance between the identified gateway and the tag with a communication error based on the signal attenuation factor and the antenna characteristics and estimating a position of the tag with a communication error based on a position coordinate of the identified gateway and the spaced distance.

2. The electronic shelf label system server according to claim 1, wherein the signal attenuation factor measurement unit acquires the signal attenuation factor based on received signal strength indication (RSSI) of the tag signal.

3. The electronic shelf label system server according to claim 1, wherein the antenna characteristics are at least one of a length and a degree of the antenna which is installed in the identified gateway.

4. The electronic shelf label system server according to claim 1, wherein the tag position estimation unit maps signal attenuations depending on the spaced distance from a path loss in a free space and reflects a beam coverage depending on the antenna characteristics to determine the spaced distance.

5. The electronic shelf label system server according to claim 1, wherein the tag position estimation unit sets position coordinates of at least three gateways of which the spaced distance is determined as a center and estimates points at which at least three virtual circles setting the spaced distance as a radius meet each other as the position of the tag with a communication error.

6. A method for searching for a tag with a communication error in an electronic shelf label system server communicating with a plurality of gateways which are installed in a store, the method comprising:
identifying a gateway receiving a tag signal generated from a tag with a communication error, among the plurality of gateways;
measuring a signal attenuation factor of the tag signal which is received by the identified gateway;
measuring antenna characteristics of the identified gateway;
determining a spaced distance between the identified gateway and the tag with a communication error based on the signal attenuation factor and the antenna characteristics; and
estimating a position of the tag with a communication error based on a position coordinate of the identified gateway and the spaced distance.

7. The method according to claim 6, wherein in the measuring of the signal attenuation factor, the signal attenuation factor is acquired based on received signal strength indication (RSSI) of the tag signal.

8. The method according to claim 6, wherein the antenna characteristics are at least one of a length and a degree of the antenna which is installed in the identified gateway.

9. The method according to claim 6, wherein in the determining of the spaced distance, signal attenuations map each other depending on the spaced distance from a path loss in a free space and a beam coverage is reflected depending on the antenna characteristics to determine the spaced distance.

10. The method according to claim 6, wherein in the estimating of the tag position, position coordinates of at least three gateways of which the spaced distance is determined are set as a center and points at which at least three virtual circles setting the spaced distance as a radius meet each other are estimated as the position of the tag with a communication error.

11. A recording medium having programs of command languages implemented for each type and read by the digital processing apparatus, the programs being executed by a digital processing apparatus so as to perform the method for searching for a tag with a communication error according to any one of claims 6 to 10.
